Europäisches Patentamt

European Patent Office

Office européen des brevets

(19)

(11) **EP 1 261 227 A1**

(12) **EUROPEAN PATENT APPLICATION**

(43) Date of publication:
**27.11.2002 Bulletin 2002/48**

(51) Int Cl.⁷: **H04Q 7/38**

(21) Application number: **01401336.1**

(22) Date of filing: **21.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **MOTOROLA, INC.**
**Schaumburg, IL 60196 (US)**

(72) Inventors:
• **Abdesselem, Ouelid**
**31000 Toulouse (FR)**

• **Fouilland, Pascal**
**31170 Tournefeuille (FR)**

(74) Representative: **Litchfield, Laura Marie et al**
**Motorola European Intellectual Property Operations,**
**Midpoint - Alencon Link**
**Basingstoke, Hampshire RG21 7PL (GB)**

(54) **Method and apparatus for increased information transfer in a communication system**

(57)    A method for increasing information transfer in a communication system, such as a packet-based GPRS/EDGE system, within a mobile station that does not receive and transmit at the same time, includes providing a system with extended multislot capacity. With such extended capacity, transfer rates can be increased by providing a timing advance offset between the uplink and downlink timeslots in order to provide the mobile station sufficient frequency switching time and setup between downlink, uplink, and neighbouring cell measurement operations. As a result, transferring information between the base station and mobile station can be done such that all frequency switching and setup between downlink, uplink, and neighbouring cell measurement operations during a frame is completed within two or less timeslots, leaving the remaining greater number of timeslots available for increased information transfer.

*F I G . 3*

EP 1 261 227 A1

**Description**

**FIELD OF THE INVENTION**

The present invention relates generally to cellular communication systems and in particular, the present invention relates to method and apparatus that for extended downlink capability in a packet data communication system.

**BACKGROUND OF THE INVENTION**

The Global System for Mobile Communications (GSM) General Packet Radio Service (GPRS) and Enhanced Data for Global Evolution (EDGE) is intended to enable a service subscriber to send and receive data in an end-to-end packet transfer mode without utilization of network resources in the circuit-switched mode. GPRS, EDGE and 3rd Generation (3G) packet radio services permit the efficient use of radio and network resources when data transmission characteristics are i) packet based, ii) intermittent and non-periodic, iii) possibly frequent, with small transfers of data, e.g. less than 500 octets, or iv) possibly infrequent, with large transfers of data, e.g. more than several hundred kilobytes. User applications may include internet browsers, electronic mail and so on. GPRS/EDGE radio access network (GERAN) is the realtime migration path for GPRS/EDGE into 3rd generation wireless systems.

It is generally assumed that most internet application data traffic is generally biased in the downlink direction, meaning that a majority of application data traffic is transmitted from the network to a user application. This assumption is based both on the expected behavior of the user, since most users engage in applications that require the reception of much larger amounts of information from the network relative to the amount of information required to be transmitted to the network, and on the inherent properties of many of the applications themselves. For example, accessing a page of information on the worldwide web requires a very short transmission of an address sequence on the uplink, i.e., from the user application to the network, followed by the reception of data on the downlink, i.e., from the network to the user application, which may be several orders of magnitude larger than the transmission that caused the downlink transfer. Therefore, known packet-based systems have been constructed to support a greater flow of information in the downlink direction, and to segregate the allocation of uplink and downlink resources from one another. This construction of packet-based systems differs, for example, from the construction of circuit-switched methods, which tend to be constructed as a bi-directional virtual circuit allocating dedicated resources which may be used only occasionally throughout the life of the session.

The 3rd Generation Partnership Project; Technical Specification Group GERAN; Digital Cellular Telecommunications System (Phase 2+); Multiplexing and multiple access on the radio path (Release 4); GSM specification 3GPP TS 45.002, version 4.1.1 (2000-11), Annex B defines what is referred to as a "mobile station classes" for multislot capability in GPRS/EDGE mobile stations. The mobile station class specifies some of the behavior to which a mobile station must conform regarding its operation in packet mode, circuit-switched mode, or both packet and circuit-switched mode. Mobile station classes may also be assigned, or changed, subject to limitations such as manufacturer's options and equipment limitations. For example, a particular application may have the ability to issue a command to change the mobile station class of the subscriber equipment currently in use. The mobile station classes are therefore to be treated as "effective" classes, as a network or user may exercise some control over mobile station class identity. In addition, mobile stations are defined in terms of Type 1 and Type 2 mobile stations. Type 1 mobile stations are those mobile stations that are not required to transmit and receive at the same time. Type 2 mobiles stations are those required to transmit and receive at the same time (full duplex). Moreover, Type1 mobile stations are defined in terms of Type 1 half duplex mobile stations and Type 1 semi duplex mobile stations. Type 1 half duplex mobile stations support a modification of the number of supported timeslots depending on the frame, allowing up to eight receive timeslots on some of the frames. Such a mode of operation is not deployed today, nor in the base stations nor in the mobile stations, due to its software complexity as well as the actual low effective thoughput gain: when Frequency Hopping is used, only seven receive timeslots are available. Moreover, the number of frames reserved for uplink or power measurement is significant. The Type 1 semi duplex mobile stations only support a constant number of uplink and downlink timeslots, independently from the frame.

Further, mobile station services are defined in terms of service classes. For example, one such mobile station class is a Class A mobile station which supports simultaneous attachment, monitoring, activation, invocation and traffic flow on both circuit-switched voice and packet-switched data services. One of the problems associated with providing a Class A capable mobile station is that two receivers and two transmitters are required, along with a combiner/duplexer, interface to a common Subscriber Identity Module (SIM) card and possibly an additional call processor, depending upon the number of embedded user-level applications desired to coexist during circuit-switched voice and packet-switched data service operation. This presents the need among mobile station manufacturers to develop a completely new architecture for such equipment, resulting in an increased cost of the device. On the other hand, a Class B mobile station has been defined to support only simultaneous attachment, monitoring and activation on both circuit-switched voice and packet-switched data services, with invocation and traffic flow possible on either service on a mutually exclusive basis. Finally, a Class C mobile station is defined to support only non-simultaneous attach, i.e. mutually exclusive attach, on either circuit-switched voice or packet-switched data services, and is the lowest cost mobile station option since only one receiver circuit and one transmitter circuit is needed in the mobile station. As a result, a Class C mobile station typically is allowed to transmit or receive in any particular time period in the GPRS system.

Generally, users desire to obtain the most performance at the least cost. In the above example, a Class C, Type 1 semi-duplex mobile station provides the lowest cost due to the need for a single transceiver implementation. Performance of the mobile station is defined by the ability to transfer the most amount of data possible. In a Time Division Multiple Access (TDMA) frame in the GSM system, there are eight timeslots available for transmitting and receiving. Annex B of 3GPP TS 45.002 indicates that within the existing GPRS standard, maximum timeslot usage for a Type 1 semi-duplex mobile station occurs for multislot class 12, wherein up to four slots of transmit or receive capability can be used within each TDMA frame.

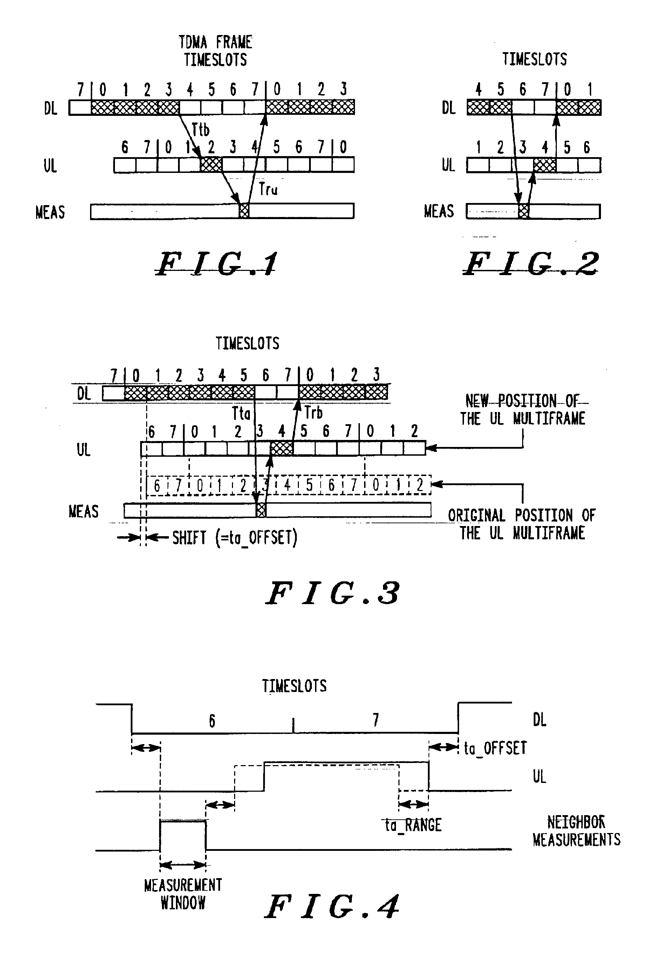

FIG. 1 illustrates the existing 4-slot receive or transmit limitation of multislot class 12. Multislot class 12 is being demonstrated since it presently provides the maximum information transfer capacity of the multislot classes for Type 1 semi-duplex mobile stations utilizing an eight timeslot TDMA frame. However, the explanation to follow is equally applicable to multislot classes 1-11. Shown are the downlink (DL) or receive timeslots in an eight-slot TDMA frame, the uplink (UL) or transmit timeslots, and a measurement timeslot wherein the mobile station performs measurement of neighbouring cells, as required in the GPRS/EDGE system. In particular, the mobile station measures the relative power received from the C0 carrier of the neighbour cells in order to list them from the highest, for purposes of triggering cell reselection or performing handovers.

Multislot class 12 provides for a maximum of four transmit or receive timeslots, and correspondingly one timeslot to receive or transmit, respectively. The remaining time slots in the eight slot TDMA frame are time buffers to accommodate the transceiver changing between uplink and downlink modes and the neighbouring cell power measurement. The remaining timeslots buffer the transmit and receive frequency switching and setup delays.

In a typical application, it is desired to maximize the number of receive timeslots, as a mobile unit primarily will be downloading information, such as from the internet, as opposed to uploading information. FIG. 1 illustrates the maximum of four receive slots (crosshatches being used to indicate used timeslots), used in the existing Release 4 GPRS standard. It is generally required that the downlink or uplink timeslots be contiguous within the TDMA frame. In addition, the mobile station must also perform the neighbouring cell measurement, which requires further frequency changes of the mobile station transceiver. For example, multislot class 12 provides a single timeslot, Ttb, to accommodate the mobile station to base station frequency change and setup, and two timeslots, Tra, to take the neighbouring cell measurement, frequency change and setup to ready the receiver for downloading the next frame. Correspondingly (not shown), two timeslots, Tta, can be used to take the neighbouring cell measurement and to ready the transmitter, and one timeslot, Trb, can be used to ready the receiver to download the next frame.

As a result, only one-half (four timeslots) of an available TDMA frame is utilized in the desired action of downloading information to a Type 1 semi-duplex, Class C mobile station. Of course, it should be recognized that this is a simplification in that the manner in which an existing medium access control for GPRS on a dedicated channel contains many other steps to setup a link, as is known in the art, such as to provide addressing, assignment, acknowledgement, circuit-switching, packet-switching, cell reselection, gain setting, command transfer, and the like.

Accordingly, what is needed is a method and apparatus for increasing timeslot usage in a low cost mobile station. It would also be of benefit to provide this improvement as a transparent operation for the mobile station.

## BRIEF DESCRIPTION OF THE DRAWINGS

The present invention is pointed out with particularity in the appended claims. However, a more complete understanding of the present invention may be derived by referring to the detailed description and claims when considered in connection with the figures, wherein like reference characters refer to similar items throughout the figures, and wherein:

FIG. 1 is graphical representation of timeslot groups for a GPRS/EDGE Type 1 semi-duplex mobile station operating in multislot class 12, in accordance with the existing standard;
FIG. 2 is graphical representation of a first embodiment of timeslot groupings for a Type 1 semi-duplex mobile station operating in an extended multislot class, in accordance with the present invention;
FIG. 3 is graphical representation of a preferred embodiment of timeslot groupings for a Type 1 semi-duplex mobile station operating in an extended multislot class, in accordance with the present invention;
FIG. 4 is graphical representation of a timing diagram for Tta in the preferred embodiment of FIG. 3;
FIG. 5 is graphical representation of a second embodiment of timeslot groupings for a Type 1 semi-duplex mobile station operating in an extended multislot class, in accordance with the present invention;

EP 1 261 227 A1

FIG. 6 is graphical representation of a second embodiment of timeslot groupings for a Type 1 semi-duplex mobile station operating in an extended multislot class, in accordance with the present invention; and

FIG. 7 is a simplified schematic diagram of a GPRS/EDGE Type 1 semi-duplex mobile station in a radio communication system in accordance with the present invention.

The exemplification set out herein illustrates the preferred embodiments of the invention in one form thereof, and such exemplification is not intended to be construed as limiting in any manner.

## DETAILED DESCRIPTION OF THE PREFERRED EMBODIMENTS

The present invention is a version of a GPRS/EDGE Type 1 semi-duplex mobile station that maximizes transmission and reception timeslot usage of GPRS/EDGE data during non-simultaneous transmission and reception modes on a traffic channel. However, other packet-based or non-packet-based communication systems can benefit by the implementation of the present invention. The usage maximization is transparent to the mobile station, as no modifications are required to the mobile station to implement the present invention, except the support of the scheduling of the associated multislot classes. Although the improvement is most applicable to data usage, voice or voice/data timeslot usage can also be maximized in accordance with the principles of the present invention.

As illustrated in FIG. 7, a communication system 100, includes a mobile station 10, such as a handset, for example, for receiving and transmitting both circuit-switched voice data and packet-switched data along a traffic channel (UL and DL) to a base station subsystem 18. Preferably, this is done operating under the GPRS/EDGE system. When data is transmitted from the base station subsystem 18 to the mobile station 10, such transmission is commonly referred to as a "downlink" transmission (DL), while data transmitted from the mobile station 10 to the base station subsystem 18 is commonly known as an "uplink" transmission (UL). It is understood that the communication system 100 contains a plurality of both mobile stations and base station subsystems. For example, base station 20 represents at least one neighbouring cell in the system. The mobile station 10 periodically measures the power of neighbouring cells 20, as is generally required in the GPRS/EDGE standard. In the GPRS/EDGE standard, the UL and DL information is sent within timeslots of a TDMA frame as part of a larger multiframe, as explained with reference to FIG. 1. However, the present invention provides extended timeslot usage over that presented for FIG. 1 as will be explained below.

The current GPRS standard limits the multislot class of a Type1, Class C mobile station (no simultaneous receive and transmit) to four downlink timeslots maximum. The present invention increases the capability of the mobile station from four to six downlink timeslots, i.e. 50% more information rate capability. In a GPRS device, this increases capacity from 85kbps to 127kbps. For an EDGE device, this increases capacity from 197kbps to 295kbps. The present invention correspondingly applies to improved uplink capacity where needed. The present invention also provides for a doubled data when there are simultaneous speech and data call, as per the dual transfer mode. When increasing the multislot capability to six or seven total timeslots (five or six receive timeslots plus one transmit timeslot), there are only one or two timeslots left to provide setup for transceiver switching and setup. From FIG. 1, there are presently three timeslots used for switching and setup, with two of the timeslots being engaged for neighbouring cell measurement. This maximum value of two timeslots was set due to technology constraints, i.e. the need for a two timeslot duration (approximately 1000 µs) to perform transceiver frequency switching, setup, and neighbour cell measurements. However, technology provides constant improvement to reduce the time needed for transceiver setup and neighbouring cell power measurement. Even so, to provide a six timeslot downlink, the available setup time is reduced to about one-half timeslot due to the uncertainty of the distance between the base station and the mobile station. However, the present invention regains at least this one-half timeslot, as will be explained below.

FIG. 2 demonstrates the problem associated with pushing the existing methodology to provide six downlink timeslots and one uplink timeslot, while also providing neighbouring cell measurement. At present, the maximum throughput for a Type 1 semi-duplex mobile is given by its availability to perform neighbour cell measurements. Although one-half timeslot is sufficient to provide neighbour cell measurement and uplink setup, this leaves no time to provide downlink setup at the end of downlink timeslot seven before the next frame downlink. Similarly, the neighbour cell measurement could be accomplished within uplink timeslot four (downlink timeslot seven). However, the uplink would need to be accomplished in uplink timeslot three, immediately after downlink timeslot five, leaving no time for setup and switching. Basically, there is too short of a time to provide for transceiver setup and switching between UL and DL frequencies and to perform the neighbour cell measurements. FIG. 2 shows that the switch between the uplink and the downlink mode would need to be almost instantaneous, and could only occur during the guard period of 8,25 bits (approximately 30 µs) between timeslots in the frame. However, this guard period is already used for timing adjustments. Therefore, the existing methodology cannot be pushed to provide six downlink (or uplink) timeslots per frame.

Timing advance is presently utilized to account for differences in distance between base station and a mobile station. Timing advance ensures that the base station receives packet bursts from the mobile station in the allocated timeslot on the base station side. Considering the eight timeslots, TS(1) to TS(8), on a given frequency, if the downlink

4

is on timeslot TS(i), then the uplink for the same mobile station is received by the base station on timeslot TS(i+3). It is key to align all the mobile stations in the cell on the uplink. If not, there is interference between uplink bursts on consecutive timeslots. If a mobile station is very close to the base station there is no propagation delay and the timing advance requested by the base station to the mobile station is zero. The mobile station can then transmit the information burst exactly on timeslot TS(i+3), and the burst will arrive at the base station at the same time. However, if the base station measures that the bursts from a mobile station are shifting, i.e. are slightly delayed, it will request a non-null timing advance to the mobile station, so that the mobile station will send the burst in advance. For example, using GSM bits, and assuming a timing advance of four bits, and knowing that one GSM bit lasts 3.69 µs, a timing advance of about 15 µs is provided compared to the mobile station's own timebase which is locked on the received bursts from the base station. As a result, propagation delay is compensated, and the bursts are received by the base station accurately on TS(i+3). The range of timing advance values, ta_range, goes from 0 to 63 bits. As explained above, that allows the mobile station to use timing advance to advance the uplink bursts up to a maximum 63*3.69 µs, which corresponds to a cell radius up to 35km, which is much larger than a typical cell radius.

The present invention introduces a timing advance offset (ta_offset) on a cell-by-cell basis, in order to shift the uplink window and increase the setup time interval with the next downlink window. In other words, a shift is made to the uplink multiframe. The timing advance offset is added to the timing advance from the base station making the shift transparent to the mobile station. Preferably, this is best applied in small and medium sized cells, typically having less than 18 km radius, in order to minimize the probability of the propagation delay causing an overlap of uplink and downlink timeslots. The timing advance offset applies to all the mobiles stations on a given cell and is controlled by the base station of that cell or its associated base station controller. Advantageously, a cell with timing advance offset capability will be able to handle the new multislot capabilities provided by the present invention without any modification of the basic GSM/GPRS/EDGE protocols. For instance, the timing advance procedures, as are now standardized, remain unchanged.

FIG. 3 shows the application of a timing advance offset and its effect on mobile station operation, in accordance with the present invention. As shown, the present invention provides six downlink timeslots (TS 0-5) and one uplink timeslot (TS 4) within a TDMA frame. Being able to have a six-downlink timeslot allocation with a Type 1 semi-duplex mobile station increases significantly the maximum downlink data throughput over the existing standard. It should be noted that a lesser number of downlink timeslots, or that five or six uplink timeslots (and one downlink timeslot) can be used equally well in the present invention, and that the six DL and one UL is only used as an example. In order to fit a neighbouring channel measurement and uplink communication within a two-timeslot window, the present invention introduces the timing advance offset. The timing advance offset corresponds to a timeslot shift between the uplink and the downlink in the base station. It can be considered equally as an offset of the downlink or the uplink. However, at the mobile station, the timing advance has an impact on the position of the uplink bursts compared to the mobile station's timebase, which is why the offset is considered an uplink offset.

FIG. 4 shows a detailed representation of downlink timeslot slots six and seven of FIG. 3. The delay given by the timing advance offset is used by the mobile station to provide sufficient time to switch between the uplink and downlink modes and to allow the performance of neighbouring cell measurements between the downlink and the uplink (Tta parameter). The extended multislot capabilities of the present invention are supported with the constraint that the possible timing advance range is reduced from the existing standard values of from 0 to 63 bits to the range of from ta_offset to ta_offset + ta_range, where ta_offset + ta_range must still be within the maximum timing advance of 63 bits. The new parameters, ta_offset and ta_range, preferably have a predefined value as used in the present invention. Alternatively, the values for ta_offset and ta_range can be sent by the mobile station to the base station or determined separately by the base station.

In practice, where ta_offset is set to a minimum timing advance value, sufficient to allow time for the mobile station to switch between uplink and downlink frequencies, then the range for timing advance in the cell, ta_range, is less than 63 bits as ta_range + ta_offset •63 bits. If it is assumed that it takes the same amount of time to switch from the downlink frequency to the frequency for neighbour cell measurement, and from the frequency for neighbour cell measurement to the uplink frequency, i.e. the switching and setup times are all equal, ta_offset, then the resulting switching, setup and measurement time is:

$$3 * ta\_offset + ta\_range + measurement\_window = 156,25 \ bits$$

as there are 156,25 bits within one timeslot of 577 µs (1 bit = 3,69 µs).

Ta_offset impacts only the base station, as it corresponds to an advance of the uplink, for all the mobile stations, compared to the downlink. Therefore, the uplink bursts will be received by the base station at TS(i+3)-ta_offset. In the case where the mobile station is very close to the base station, instead of sending zero in the timing advance command, the base station will send ta_offset, which is applied by the mobile station. In the case where the mobile station is far from the base station, knowing that the maximum timing advance value is limited to 63 bits and that the burst needs to arrive at TS(i+3)-ta_offset at the base station, the maximum propagation delay is (63-ta_offset). If ta_offset = 31 bits, the maximum cell radius is 35 km*(63-31)/63=18km. In other words, if looked at from the base station prospective, the base station is limited to send the timing advance command in the range of from ta_offset to 63 bits. Maximum timing advance is always 63 GSM bits, but the maximum cell radius depends on the timing advance offset.

Some possible values for the timing parameters are given in Table 1 below and take into account the propagation delay within a cell.

Table 1

| Possible timing advance values | | | |
|---|---|---|---|
| Cell Radius | ta range | ta offset | Measureme nt Window |
| 14 km | 24 bits | 39 bits | 16 bits |
| 18 km | 32 bits | 31 bits | 32 bits |
| 27 km | 48 bits | 15 bits | 64 bits |

It should be noted that with improved technologies, transceiver set up times and the neighbouring cell measurement window can be reduced (e.g. 32 bits). The length of the measurement window is a function of the number of GSM bits required for the mobile station controller to compute an average power level. This averaging should be long enough to remove the effects of noise and fast fading. The use of 64 bits is sufficient, but this may be accomplished successfully with a lesser number of bits, such as 32 bits for example.

To standardize performance, it is preferred to use only one of the set of values given in Table 1. The medium set of values is a good compromise as the cell radius (18 km) is only reduced by two compared to the typical maximum cell radius, and the mobile station has 100 μs to switch from one frequency to another one. The neighbour cell measurements are made on 32 bits to keep a good accuracy. Another solution would be to use a table of values, such as from Table 1 for example, or a suitable algorithm to provide values, such that an operator would be able to define different behaviors depending on the cell size. This solution is more complicated as the mobile station would need to indicate its ta_offset capability depending on its available performance. In either case, the present invention defines a new base station operation, with a systematic ta_offset (which means that the transmit path and receive path are shifted) and a maximum ta_range. As a result, when the base station controller communicates information to its associated base station controller system (e.g. for location services), the base station needs to remove the effect of the ta_offset.

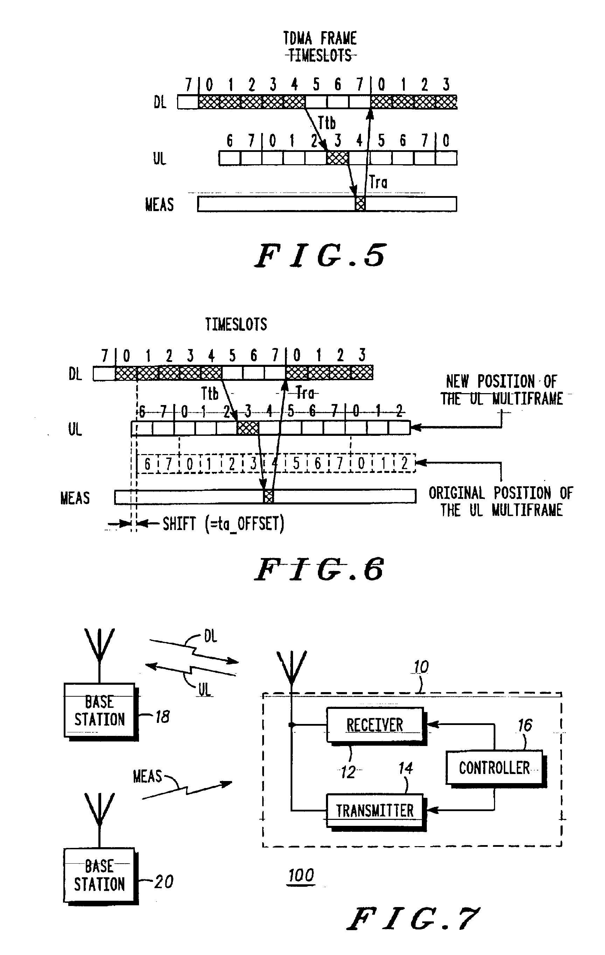

The solution described above also allows a new extended multislot class between five communication timeslots (multislot classes 8 to 12) and seven communication timeslots (as described above). FIGs. 5 and 6 provide a comparison of the behaviour of the present invention with five downlink timeslots and one uplink timeslot (six communication timeslots). As shown in FIG. 5, the time to perform neighbour cell measurements is within one timeslot duration, which is rather small for two frequency switches and one measurement window and is only usable within a limited cell size, whereas the time to switch from downlink to uplink (downlink timeslot 5) is quite long. When the solution described previously for the present invention is used, the time is more balanced between these two phases reducing cell size limitations, as shown in the preferred embodiment of FIG. 6.

Therefore, it is proposed to define two types of extended multislot classes supporting six timeslots, depending on the mobile station technology. One type uses the embodiment of FIG. 5, i.e. the mobile station is able to perform neighbour cell measurements within one timeslot (577 μs). The second definition uses the ta_offset mechanism of the present invention to increase the time available for neighbour cell measurements, as in the preferred embodiment of FIG. 6. In practice, the new extended multislot classes are introduced in such way that the coding is fully backwards compatible existing network multislot classes (described in 3rd Generation Partnership Project; Technical Specification Group Core Network; Mobile radio interface layer 3 specification; Core Network Protocols - Stage 3, (Release 4), 3GPP TS 24.008, version 4.2.0 (2001-03), section 10.5.5.12.

A Type 1 semi-duplex mobile station supporting extended multislot classes, in accordance with the present invention, shall give its Multislot class as usual (1 to 12) and then adds an extension to this to indicate its extended multislot capability. This proposed extension is called "Extended multislot class" as codified in the third from last line of Table 2.

Table 2
Command structure for extended multislot classes

```
< Content > ::=
< RF Power Capability : bit (3) >
{ 0 | 1 <A5 bits : <A5 bits> > } -- zero means that the same values apply for
parameters as in the immediately preceding Access capabilities field within this IE
-- The presence of the A5 bits is mandatory in the 1st Access capabilities struct
within this IE.
< ES IND : bit >
< PS : bit >
< VGCS : bit >
< VBS : bit >
{ 0 | 1 < Multislot capability : Multislot capability struct > } -- zero means that the
same values for multislot parameters as given in an earlier Access capabilities
field within this IE apply also here
{ 0 | 1 < 8PSK Power Capability : bit(2) >} – '1' also means 8PSK modulation
capability in uplink.
< COMPACT Interference Measurement Capability : bit >
< Revision Level Indicator : bit >
< UMTS FDD Radio Access Technology Capability : bit > -- 3G RAT
< UMTS TDD Radio Access Technology Capability : bit > -- 3G RAT
< CDMA 2000 Radio Access Technology Capability : bit > -- 3G RAT
{ 0 | 1 <Extended multislot class : bit (3) > }
-- error: struct too short, assume features do not exist
-- error: struct too long, ignore data and jump to next Access technology
```

The above structure gives one value from Table 3, depending on extended class:

Table 3

| Extended Multislot Classes | | | | | | | |
|---|---|---|---|---|---|---|---|
| Extended Multislot class | Maximum number of slots | | | Minimum number of slots | | | Type |
| | Rx | Tx | Sum | Tta | Ttb | Tra | Trb | |
| 1 | 5 | (a) | 6 | 1 | 1 | 1 | 1 | 1 |
| 2 | 5 | 5 | 6 | 1 | 1 | 1 | 1 | 1 |
| 3 | 5 | (a) | 6 | 1 | 1 | 1 (b) | 1 (b) | 1 |
| 4 | 5 | 5 | 6 | 1 | 1 | 1 (b) | 1 (b) | 1 |
| 5 | 6 | (a) | 7 | 1 | 1 | 0 (b) | 0 (b) | 1 |
| 6 | 6 | 5 | 7 | 1 | 1 | 0 (b) | 0 (b) | 1 |
| 7 | 6 | 6 | 7 | 1 | 1 | 0 (b) | 0 (b) | 1 |

where the Tx value of (a) is equal to the Tx value from the associated multislot class, and for (b) a timing advance offset of 31 bits is used.

The solution provided by the present invention provides many advantages. Firstly, there is a minimal system impact. For example, the mobile station only need indicate a new extended multislot class supported, and be able to schedule the uplink and downlink transfer, as well as power measurement on neighbor cells. There is no other impact, as the timing advance procedure is used as usual, so the shift of the uplink multiframe is transparent for the mobile station. Correspondingly, the base station needs to support the new extended multislot class. Moreover, the base station needs to shift the uplink multiframe from the downlink by ta_offset. In addition, the timing advance algorithm must add the ta_offset constant to each timing advance command sent to the mobile station and remove it from all timing advance values received from the mobile station. Another advantage is forwards and backwards compatibility, i.e. the solution is fully compatible with existing mobile stations, and mobile stations being manufactured can incorporate the new features before it is implemented in the network. A further advantage is throughput increase. For a pure downlink data call (having maximized downlink capability), existing multislot class twelve provides for four receive timeslots and one transmit timeslot per frame. The extended multislot provisions of the present invention increases the downlink capacity to six receive timeslots and one transmit timeslot per frame, resulting in a 50% improvement in downlink data transfer. For a voice and downlink data call (having maximized downlink capability), existing multislot class twelve provides for three receive timeslots (2 data and 1 speech) and two transmit timeslots per frame. The extended multislot provisions of the present invention increases the downlink capacity to five receive timeslots (4 data and 1 speech) and two transmit timeslots per frame, resulting in a 100% improvement in downlink data transfer.

In practice, GPRS/EDGE data frames are directed by a medium access controller (MAC) layer that organizes the transmission and reception of packet-based information onto and from the physical layer, as is known in the art, along with the assignment of voice timeslots with the optional possibility of one or more data timeslots according to the mobile station's multislot class. If one or more data timeslots are associated with the voice/alternating data timeslot, then the MAC mode for each timeslot would be issued by the base station to inform the mobile station how it is to determine when to transmit.

An additional GPRS medium access control (MAC) mode, by which GPRS data is "streamed" to and from the air interface in a circuit-switched manner can be utilized, also. Using this method for streaming GPRS/EDGE data to and from a packet-switched channel, data may be sent and received on the same circuit-switched voice timeslot as circuit-switched information. Although the medium access controller layer would operate in a circuit-switched manner, the packet-based nature of the data above the medium access controller layer would be preserved.

Error correction is also provided to absorb the periodic errors which result from the fading channel, and also handles certain aspects of GPRS/EDGE information transfer setup and teardown.

It should be noted that there is no requirement for the firmly associated data timeslots to be dedicated to one mobile station, although the timeslots are logically bound. Therefore, in the downlink direction, the base station may assign blocks to different mobile stations that recognize their own addresses.

Another embodiment of the present invention includes a method for increasing information transfer in a communication system. A first step of the method includes supplying a base station, and a mobile station that does not receive and transmit at the same time. The base station and mobile station are operable in an extended multislot capacity using an eight-timeslot frame, in accordance with the present invention. A next step includes providing a timing advance offset between the uplink and downlink timeslots so as to provide the mobile station sufficient frequency switching and setup times between downlink, uplink, and neighbouring cell measurement operations. A next step includes frequency switching and setup between the downlink, uplink, and neighbouring cell measurement operations such that the all frequency switching and setup is completed within a total cumulative period of two or less timeslots in a frame. Preferably, the transferring information step includes all frequency switching and setup being completed within a total period of one timeslot, i.e. switching, setup and neighbouring cell measurement are all accomplished within a total cumulative time of one timeslot. A next step includes transferring information between the base station and mobile station using the remaining available timeslots in the frame. For an eight-timeslot TDMA frame, the present invention can provide up to six continuous timeslots for downloading (or uploading) information, such as data for example.

In conclusion, the present invention provides extended multislot classes for the GPRS/EDGE standard to increase Type 1 semi-duplex mobile station throughput and performances. In addition, these new extended multislot classes are optional for the base station and the mobile station, thereby providing compatibility and minimizing the impact in the mobile station and in the base station. The throughput gain is 50% for a pure unidirectional data call and up to 100% if a speech call is established in parallel. If a voice timeslot and one or more data timeslots are included, the communication system can utilize any of the previously discussed methods for accessing the associated uplink or downlink connection. The present invention can be applied to any communication system utilizing uplink and downlink timeslots and is not limited to a GPRS/EDGE or other packet-based system.

The simplified version of extended multislot classes for Type 1 semi-duplex mobile stations, according to the present invention, permits operators to offer increase transfer rates for voice and GPRS/EDGE data services on relatively low-cost equipment having a single receiver/transmitter. This improvement is compatible with, and would be transparent to, presently configured mobile stations.

While a particular embodiment of the present invention has been shown and described, modifications may be made. It is therefore intended in the appended claims to cover all such changes and modifications which fall within the broad scope of the invention.

**Claims**

1. A method for increasing information transfer in a communication system (100) having a base station (18, 20) and a mobile station (10) that does not receive and transmit at the same time, comprising the steps of:

   providing a timing advance offset between the uplink and downlink timeslots so as to provide sufficient frequency switching times between downlink, uplink, and neighbouring cell measurement operations for the mobile station (10);
   frequency switching between the downlink, uplink, and neighbouring cell measurement operations such that the all frequency switching is completed within a total cumulative period of two or less timeslots in a frame; and
   transferring information using the remaining available timeslots in the frame defining an extended multislot capacity.

2. The method of claim 1, wherein the transferring information step includes all frequency switching being completed within a total period of one timeslot.

3. The method of claim 1, wherein the providing step includes the base station (18, 20) providing the timing advance offset to an uplink multiframe.

4. The method of claim 1, wherein the providing step includes substantially equalizing the times available for the frequency switching operations between the downlink, uplink, and neighbouring cell measurement operations.

5. The method of claim 1, wherein the frequency switching step also includes time for all necessary channel setup protocols to provide downlink, uplink, and neighbouring cell measurement operations.

6. The method of claim 1, wherein the transferring step includes transferring information on the downlink for five or more contiguous timeslots in an eight-timeslot frame.

7. The method of claim 1, wherein the information transfer is packet-based.

8. The method of claim 7, wherein the information transfer utilizes a TDMA protocol using an eight-slot frame.

9. A base station (18, 20) operable in a TDMA communication system that includes a mobile station (10) that does not receive and transmit at the same time, the base station (18, 20) comprising:

   an extended multislot capacity operable between the base station (18, 20) and a mobile station (10); and
   a timing advance offset applicable between uplink and downlink timeslots of the communication system, the timing adjustment offset provides sufficient frequency switching times between downlink, uplink, and neighbouring cell measurement operations for the mobile station,
   the base station (18, 20) applying the timing advance offset such that the all frequency switches during a frame are completed within a total cumulative period of two or less timeslots, with respective downlink and uplink communication using the remaining available timeslots in the frame.

10. The base station (18, 20) of claim 9, wherein all frequency switching is performed within a total cumulative time period of one timeslot.

11. The base station (18, 20) of claim 9, wherein the timing advance offset is applied to the uplink multiframe by the base station.

12. The base station (18, 20) of claim 9, wherein the transfer of information on the downlink lasts from five to six contiguous timeslots in an eight-timeslot frame.

13. A communication system (100) which provides increased information transfer between a base station (18, 20) and a mobile station (10) that does not receive and transmit at the same time, the system comprising:

   an extended multislot capacity operable between the base station (18, 20) and mobile station (10); and
   a timing advance offset applicable between uplink and downlink timeslots of the communication system (100), the timing adjustment offset provides sufficient frequency switching times between downlink, uplink, and neighbouring cell measurement operations for the mobile station (10) such that the all frequency switches are completed within a total cumulative period of two or less timeslots in a frame, wherein information transfer occurs using the remaining available timeslots in the frame.

14. The communication system (100) of claim 13, wherein all frequency switching can be accomplished within a total period of one timeslot.

15. The communication system (100) of claim 13, wherein the timing advance offset is applied to the uplink multiframe.

16. The communication system (100) of claim 13, wherein the timing advance offset provides substantially equal times for switching frequencies between the downlink, uplink, and neighbouring cell measurement operations.

17. The communication system (100) of claim 13, wherein the timing advance offset provides sufficient time between downlink, uplink, and neighbouring cell measurement operations to provide all necessary channel setup protocols.

18. The communication system (100) of claim 13, wherein information is transferred on the downlink for from five to six contiguous timeslots in an eight-timeslot frame.

19. The communication system (100) of claim 13, wherein the communication system is operable in a packet-based communication system.

20. The communication system (100) of claim 19, wherein the communication system is operable in a TDMA system using an eight-slot frame.

TDMA FRAME
TIMESLOTS

*FIG.1*

TIMESLOTS

*FIG.2*

TIMESLOTS

NEW POSITION OF
THE UL MULTIFRAME

ORIGINAL POSITION OF
THE UL MULTIFRAME

SHIFT (=ta_OFFSET)

*FIG.3*

TIMESLOTS

ta_OFFSET

ta_RANGE

NEIGHBOR
MEASUREMENTS

MEASUREMENT
WINDOW

*FIG.4*

TDMA FRAME
TIMESLOTS

DL

| 7 | 0 | 1 | 2 | 3 | 4 | 5 | 6 | 7 | 0 | 1 | 2 | 3 |

UL

| 6 | 7 | 0 | 1 | 2 | 3 | 4 | 5 | 6 | 7 | 0 |

Ttb

Tra

MEAS

## FIG.5

TIMESLOTS

DL

| 7 | 0 | 1 | 2 | 3 | 4 | 5 | 6 | 7 | 0 | 1 | 2 | 3 |

Ttb    Tra

NEW POSITION OF
THE UL MULTIFRAME

UL

| 6 | 7 | 0 | 1 | 2 | 3 | 4 | 5 | 6 | 7 | 0 | 1 | 2 |

| 6 | 7 | 0 | 1 | 2 | 3 | 4 | 5 | 6 | 7 | 0 | 1 | 2 |

ORIGINAL POSITION OF
THE UL MULTIFRAME

MEAS

SHIFT (=ta_OFFSET)

## FIG.6

DL

UL

BASE
STATION  18

MEAS

BASE
STATION  20

10

RECEIVER

CONTROLLER  16

12    14

TRANSMITTER

100

## FIG.7

**European Patent Office**

## EUROPEAN SEARCH REPORT

Application Number

EP 01 40 1336

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ETSI: "Digital cellular telecommunications system (Phase 2+); Multiplexing and multiple access on the radio path (Release 4); TS 45.002 version 4.3.0" 1 April 2001 (2001-04-01) , ESTI , SOPHIA ANTIPOLIS, FRANCE XP002178065 * paragraphs [ANNEX],[0B.3] * --- | 1-20 | H04Q7/38 |
| A | GB 2 328 838 A (MOTOROLA LTD) 3 March 1999 (1999-03-03) * page 2, line 1 - line 14 * --- | 1,9,13 | |
| A | WO 00 74284 A (NOKIA MOBILE PHONES LTD ;NOKIA INC (US)) 7 December 2000 (2000-12-07) * page 3, line 17 - line 32 * * page 5, line 9 - line 24 * ----- | 1,9,13 | |
| | | | **TECHNICAL FIELDS SEARCHED (Int.Cl.7)** H04Q |

The present search report has been drawn up for all claims

| Place of search | Date of completion of the search | Examiner |
|---|---|---|
| BERLIN | 2 October 2001 | Bernedo Azpiri, P |

**ANNEX TO THE EUROPEAN SEARCH REPORT
ON EUROPEAN PATENT APPLICATION NO.** EP 01 40 1336

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2001

| Patent document cited in search report | | | Publication date | Patent family member(s) | | Publication date |
|---|---|---|---|---|---|---|
| GB 2328838 | A | | 03-03-1999 | AU 9258098 A | | 22-03-1999 |
| | | | | CN 1272260 T | | 01-11-2000 |
| | | | | WO 9912277 A1 | | 11-03-1999 |
| | | | | EP 1010259 A1 | | 21-06-2000 |
| | | | | NO 20001011 A | | 28-04-2000 |
| WO 0074284 | A | | 07-12-2000 | AU 5153300 A | | 18-12-2000 |
| | | | | WO 0074284 A1 | | 07-12-2000 |

EPO FORM P0459